# EUROPÄISCHE PATENTSCHRIFT

(11) **EP 4 151 359 B1**
(45) Veröffentlichungstag und Bekanntmachung des Hinweises auf die Patenterteilung: **01.07.2026**
(21) Anmeldenummer: 22175639.8
(22) Anmeldetag: 26.05.2022
(51) Int. Cl.: B23Q 3/06, A61C 13/00

(54) **HALTEVORRICHTUNG FÜR EINEN ROHLING**
HOLDING DEVICE FOR A BLANK
DISPOSITIF DE MAINTIEN POUR UNE ÉBAUCHE

(30) Priorität: 16.09.2021 EP 21197107
(43) Veröffentlichungstag der Anmeldung: 22.03.2023
(73) Patentinhaber: Ivoclar Vivadent AG, 9494 Schaan (LI)
(72) Erfinder: HABIT, Andreas, 6774 Tschagguns (AT)
(74) Vertreter: Baldus, Oliver

(56) Entgegenhaltungen:
- WO-A1-2021/048299
- WO-A1-2021/157709
- CN-U- 211 243 835
- US-A1- 2016 206 410

## Beschreibung

Die vorliegende Erfindung betrifft eine Haltevorrichtung für einen Rohling, ein Hilfswerkzeug zum Öffnen der Haltevorrichtung und ein Verfahren zum Halten des Rohlings.

Im Rahmen des täglichen Gebrauches von Dentalfräsgeräten, die scheibenförmige Rohlinge verarbeiten, sogenannte Ronden, sind regelmäßig Materialwechsel (Bestückungsvorgänge) erforderlich. Bei diesen Vorgängen wird der Rohling aus einer Werkstückaufnahme entnommen und durch einen neuen Rohling getauscht. Dieser Vorgang ist je nach Dentalfräsgerät und Hersteller unterschiedlich. Da diese Vorgänge eine Interaktion des Benutzers erfordern, sollten diese so einfach und zeitsparend wie möglich gehalten werden.

Zum Entriegeln heutiger Haltevorrichtungen für Fräsrohlinge werden derzeit vier Schrauben gelöst, so dass im Anschluss ein Klemmring entnommen und der Rohling ersetzt werden kann. Danach wird der Klemmring wieder eingesetzt, die Schrauben werden von Hand angesetzt und mit einem vorgegebenen Drehmoment festgeschraubt. Dieser Vorgang ist zeitintensiv und erfordert Fingerspitzengefühl, Werkzeug und Aufmerksamkeit.

Die Druckschrift WO 2021/048299 A1 bildet die Basis vom Oberbegriff des Anspruchs 1 und betrifft eine Haltevorrichtung für ein scheibenförmiges, dentales Werkstück, mit einem um eine Zentralachse ausgebildeten Haltering zum Aufnehmen des dentalen Werkstücks und einer Spannvorrichtung zum Einspannen des dentalen Werkstücks am Haltering.

Die Druckschrift WO 2021/157709 A1 betrifft einen Scheibenhalter mit einem Halterkörper, der eine Öffnung aufweist. In die Öffnung wird eine Scheibe eingelegt. Die Scheibe wird von einem Deckelkörper mit rechteckiger Form durch eine Drehbewegung eingeklemmt.

Die Druckschrift CN 211 243 835 U betrifft eine multifunktionale Vorrichtung für eine Prothesenfräsmaschine, die eine Basis 1 mit einer kreisförmigen Durchgangsbohrung in der Mitte und eine Befestigungsnut 2 innerhalb der kreisförmigen Durchgangsbohrung aufweist.

Die Druckschrift US 2016/206410 A1 betrifft eine Haltevorrichtung für ein dentales, Werkstück, mit einem Halteelement und einer Befestigungsvorrichtung. Durch eine Relativbewegung der Befestigungsvorrichtung zum Halteelement ist das Werkstück an der Haltevorrichtung befestigbar.

Es ist daher die technische Aufgabe der vorliegenden Erfindung, das Einlegen eines Rohlings in eine Haltevorrichtung zu vereinfachen und zu beschleunigen.

Diese technische Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch eine Haltevorrichtung für einen Rohling gelöst, mit einem ersten Halteelement zum Einlegen des Rohlings; und einem zweiten Halteelement zum Einspannen des Rohlings, das durch eine Drehbewegung an dem ersten Halteelement arretierbar ist, wobei das erste Halteelement zumindest ein Federelement zum Ausüben einer Spannkraft auf einen Führungsabschnitt des zweiten Halteelements umfasst oder das zweite Halteelement zumindest ein Federelement zum Ausüben einer Spannkraft auf einen Führungsabschnitt des ersten Halteelements umfasst. Durch die Haltevorrichtung wird eine Zeitersparnis beim Ein- und Ausspannen des Rohlings erreicht der Rohling fest zwischen den Haltelementen eingespannt werden kann. Zudem wird der Rohling stabil zwischen den beiden Halteelementen gehalten.

In einer technisch vorteilhaften Ausführungsform der Haltevorrichtung ist das zweite Halteelement durch einen offenen oder geschlossenen Ring gebildet. Dadurch wird beispielsweise der technische Vorteil erreicht, dass der Rohling durch eine Drehbewegung fixiert werden kann. Der Ring lässt sich auf einfache Weise herstellen.

In einer weiteren technisch vorteilhaften Ausführungsform der Haltevorrichtung umfasst der Ring radial nach innen oder nach außen hervorstehende Führungsabschnitte. Die Führungsabschnitte können durch Stifte gebildet sein. Die Führungsabschnitte können sektorförmig radial hervorstehen. Dadurch wird beispielsweise der technische Vorteil erreicht, dass die Führungsabschnitte sich an ansprechenden Hinterschnitten in dem ersten Halteelement abstützen können.

In einer weiteren technisch vorteilhaften Ausführungsform der Haltevorrichtung sind die Führungsabschnitte an Armen angeordnet, die sich in axialer Richtung des zweiten Halteelements erstrecken. Dadurch wird beispielsweise der technische Vorteil erreicht, dass der Rohling über eine große Spannweite hinweg eingespannt werden kann.

In einer weiteren technisch vorteilhaften Ausführungsform der Haltevorrichtung umfassen die radial hervorstehenden Führungsabschnitte jeweils einen Federabschnitt zum Erzeugen einer Spannkraft auf den Rohling in Richtung des ersten Halteelements. Dadurch wird beispielsweise der technische Vorteil erreicht, dass Rohlinge federnd mit einer vorgegebenen Spannkraft in die Haltevorrichtung eingesetzt werden können.

In einer weiteren technisch vorteilhaften Ausführungsform der Haltevorrichtung erstrecken sich die Führungsabschnitte über die Hinterschnitte. Dadurch wird beispielsweise ebenfalls der technische Vorteil erreicht, dass sich die Führungsabschnitte an den Hinterschnitten abstützen können.

In einer weiteren technisch vorteilhaften Ausführungsform der Haltevorrichtung umfasst das erste oder zweite Halteelement ein Anschlagselement zum Begrenzen der Drehbewegung. Dadurch wird beispielsweise der technische Vorteil erreicht, dass ein Überdrehen des zweiten Halteelements verhindert wird und der korrekte Sitz des Rings durch den Anschlag vorgegeben ist.

In einer weiteren technisch vorteilhaften Ausführungsform der Haltevorrichtung ist das Federelement durch eine Blattfeder gebildet. Dadurch wird beispielsweise der technische Vorteil erreicht, dass sich die Federelemente mit geringem Aufwand herstellen lassen.

In einer weiteren technisch vorteilhaften Ausführungsform der Haltevorrichtung umfasst das erste oder zweite Haltelement zumindest eine Aussparung zum Hindurchführen des Führungsabschnittes. Dadurch wird beispielsweise der technische Vorteil erreicht, dass die Führungsabschnitte auf die Gegenseite des gegenüberliegenden Haltelements geführt werden können und sich eine ineinandergreifende Befestigung zwischen den Halteelementen ermöglicht wird.

In einer weiteren technisch vorteilhaften Ausführungsform der Haltevorrichtung ist die Blattfedern v-förmig. Dadurch wird beispielsweise der technische Vorteil erreicht, dass eine hohe Spannkraft zum Einspannen des Rohlings erzeugt werden kann.

In einer weiteren technisch vorteilhaften Ausführungsform der Haltevorrichtung liegt eine Seite der v-förmigen Blattfeder an dem ersten Halteelement an. Dadurch wird beispielsweise der technische Vorteil erreicht, dass eine gute Kraftübertragung zwischen den Haltelementen stattfindet.

In einer weiteren technisch vorteilhaften Ausführungsform der Haltevorrichtung sind die Federelemente an der Seite des ersten Halteelement angeordnet, die dem zweiten Halteelement abgewandt ist. Dadurch wird beispielsweise der technische Vorteil erreicht, dass der Rohling von den Halteelementen umgeben wird und Beschädigungen vermieden werden.

In einer weiteren technisch vorteilhaften Ausführungsform der Haltevorrichtung umfasst das erste Halteelement Hinterschnitte zum Abstützen der Federabschnitte des zweiten Halteelements in axialer Richtung. Dadurch wird beispielsweise der technische Vorteil erreicht, dass eine gute Befestigung des ersten und zweiten Halteelements erreicht wird.

In einer weiteren technisch vorteilhaften Ausführungsform der Haltevorrichtung sind die Hinterschnitte um die Werkstückaufnahme herum angeordnet. Dadurch wird beispielsweise der technische Vorteil erreicht, dass eine gleichmäßige Kraftverteilung auf den Rohling ausgeübt werden kann.

In einer weiteren technisch vorteilhaften Ausführungsform der Haltevorrichtung umfasst das erste Halteelement ein Kugeldruckstück, ein Feder-Nut-System oder ein Adapterstück zum Einrasten in dem Rohling. Dadurch wird beispielsweise der technische Vorteil erreicht, dass erforderliche Anpassungen und Positionierungen auf einfache Weise vorgenommen werden können.

In einer weiteren technisch vorteilhaften Ausführungsform der Haltevorrichtung umfasst das erste Halteelement ein Verriegelungselement zum Verriegeln des zweiten Halteelements in einer geschlossenen Position. Dadurch wird beispielsweise der technische Vorteil erreicht, dass ein unbeabsichtigtes Lösen oder Öffnen der Haltevorrichtung verhindert wird.

In einer weiteren technisch vorteilhaften Ausführungsform der Haltevorrichtung sind das erste Halteelement und/oder das zweite Halteelement aus einem glasfaserverstärkten Material gebildet. Die Haltevorrichtung kann dann einen Funk-Chip (RFID - Radio-Frequency Identification) umfassen. Dadurch wird beispielsweise der technische Vorteil erreicht, dass Funkwellen durch die Haltevorrichtung hindurchtreten können. Trotzdem weisen die Haltelemente eine hohe Stabilität auf.

Gemäß einem zweiten Aspekt wird die technische Aufgabe durch ein Verfahren zum Halten eines Rohlings gelöst, mit den Schritten eines Einlegens des Rohlings in ein erstes Halteelement; und eines Einspannens des Rohlings durch eine Drehbewegung eines zweiten Halteelements, das an dem ersten Halteelement arretierbar ist, wobei die Federabschnitte des zweiten Halteelements an Hinterschnitten des ersten Halteelements abgestützt oder radial nach innen oder nach außen hervorstehende Führungsabschnitte des ersten oder zweiten Halteelements an Federelementen des ersten oder zweiten Halteelements abgestützt werden. Dadurch werden die gleichen technischen Vorteile wie durch die Haltevorrichtung nach dem ersten Aspekt erreicht und der Rohling fest zwischen den Halteelementen eingespannt werden kann.

In einer technisch vorteilhaften Ausführungsform des Verfahrens wird eine Spannkraft auf den Rohling in Richtung des ersten Halteelement erzeugt. Dadurch wird beispielsweise der technische Vorteil erreicht, dass der Rohling zuverlässig in die Haltevorrichtung eingespannt werden kann.

Ausführungsbeispiele der Erfindung sind in den Zeichnungen dargestellt und werden im Folgenden näher beschrieben.

Es zeigen:
- Fig. 1: eine zusammengesetzte Haltevorrichtung mit einem Rohling, einem ersten und einem zweiten Halteelement;
- Fig. 2: eine Ansicht eines ersten Halteelements einer Haltevorrichtung;
- Fig. 3: eine Ansicht eines zweiten Halteelements einer Haltevorrichtung;
- Fig. 4: eine Ansicht eines Rohlings;
- Fig. 5: eine Haltevorrichtung mit einem Hilfswerkzeug zum Öffnen der Haltevorrichtung;
- Fig. 6: eine weitere Ansicht der Haltevorrichtung mit einem beweglichen Verriegelungselement;
- Fig. 7: eine sekundäre Verriegelung der Haltevorrichtung;
- Fig. 8: ein Blockdiagramm eines Verfahrens zum Halten eines Rohlings;
- Fig. 9: eine weitere Ausführungsform der Haltevorrichtung;
- Fig. 10: eine Ansicht eines zweiten Halteelements der Haltevorrichtung; und
- Fig. 11: eine Ansicht eines ersten Halteelements der Haltevorrichtung.

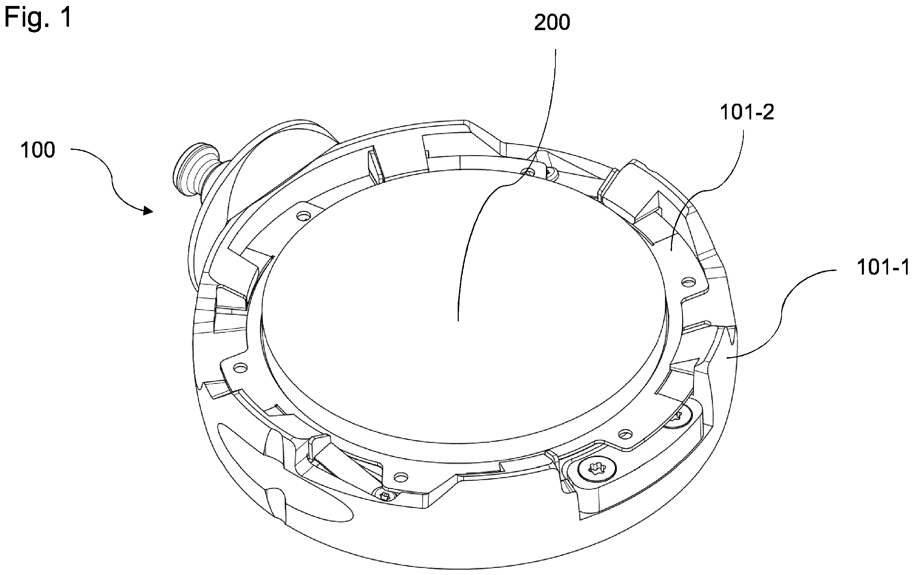

Fig. 1 zeigt eine zusammengesetzte Haltevorrichtung 100 mit einem Rohling 200, einem ersten und einem zweiten Halteelement 101-1 und 101-2. Die Haltevorrichtung 100 dient zum Einspannen und Halten des Rohlings 200 in einer Dentalfräsmaschine. Die Haltevorrichtung 100 mit den Halteelementen 101-1 und 101-2 bildet ein Schnellspannsystem, das auf dem Prinzip eines Bajonettverschlusses basiert. Aus dem Rohling 200 können Dentalobjekte, wie beispielsweise Kronen oder Brücken, mittels der Dentalfräsmaschine gefräst werden.

Die Haltevorrichtung 100 kann als Schnellspannsystem modular in die Dentalfräsmaschine eingesetzt werden. Die Haltevorrichtung 100 kann aber auch direkt in der Dentalfräsmaschine verwendet werden, bei der das erste Halteelement 101-1 ein integraler Bestandteil der Dentalfräsmaschine ist und nicht gewechselt werden muss.

Ein falsches Einlegen des Rohlings 200, wie beispielsweise ein Vertauschen der Ober- und Unterseite, kann durch eine entsprechende Formgebung des Rohlings 200 und der Halteelemente 101-1 und 101-2 verhindert werden. In der Haltevorrichtung 100 wird eine Spannkraft auf den Rohling 200 mittels einer Drehung eines Rings durch gegenüberliegende Hinterschnitte erzeugt. Der Ring 103 kann als Federring ausgebildet sein. Dadurch kann der Rohling 200 stabil zwischen den Halteelementen 101-1 und 101-2 fixiert werden. Dies findet in Zusammenspiel mit einem bajonettartigen Verriegelungsmechanismus statt.

Die Haltevorrichtung 100 erfordert kein Schraubgewinde für Befestigungsschrauben, die bei der Benutzung oft beschädigt werden oder gelöste Gewindeeinsätze entstehen. Zum Einspannen des Rohlings 200 in der Haltevorrichtung 100 sind daher keine Drehmomentschlüssel oder Befestigungsschrauben erforderlich, die verloren gehen, beschädigt oder verschleißen können. Die Spannkraft auf den Rohling 200 hängt nicht mehr von der richtigen Anwendung eines Drehmomentschlüssels beim Anziehen von Befestigungsschrauben ab. Zudem ist die Haltevorrichtung 100 kompatibel mit Wechsler-Systemen.

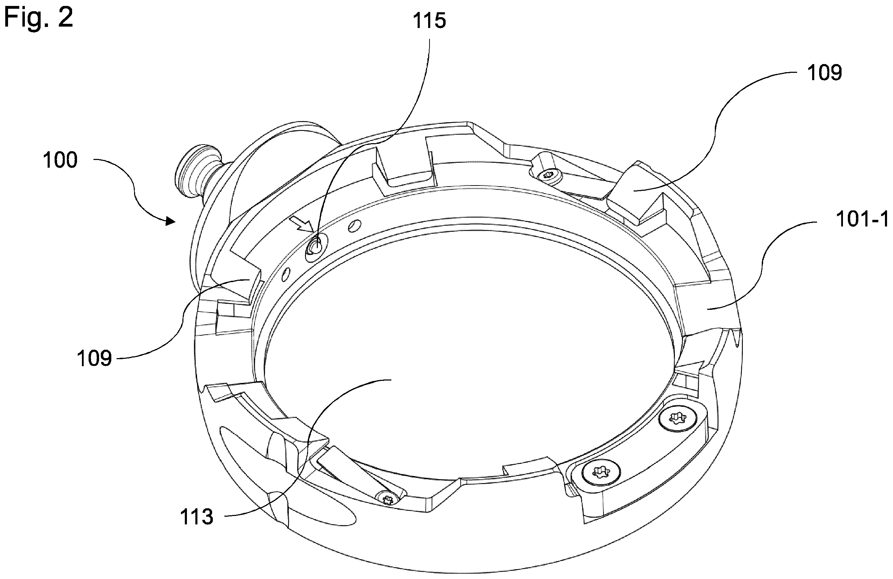

Fig. 2 zeigt eine Ansicht des ersten Halteelements 101-1 der Haltevorrichtung 100. Das Halteelement 101-1 ist ringförmig ausgebildet. In dem Inneren des Halteelements 101-1 wird der Rohling 200 eingesetzt und aufgenommen. Das erste Halteelement 101-1 umfasst zu diesem Zweck eine zylinderförmige Werkstückaufnahme 113 zum Einlegen des scheibenförmigen Rohlings 200.

Der Rohling 200 wird mit der richtigen Seite nach Oben in das Halteelement 101-1 eingelegt. In das Innere der Haltevorrichtung 100 ragt ein Kugeldruckstück 115, an dem der Rohling 200 einrastet. Das Kugeldruckstück 115 kann in einer passenden Nut oder Bohrung 201 an der Außenseite des Rohlings 200 einrasten und positioniert somit den Rohling 200. Dazu dreht der Benutzer den Rohling im Halteelement 101-1, bis das Kugeldruckstück 115 in der Nut im Rohling 200 einrastet. Es entsteht hier ein hörbares Einrastgeräusch, wenn der Rohling 200 auf die richtige Position gedreht wird.

Bei der Verwendung eines Rohlings 200 ohne diese Bohrung oder Nut 201 federt das Druckstück 115 ein und wird in dem ersten Halteelement 101-1 aufgenommen. Dadurch kann eine Kompatibilität mit anderen Rohlingen sichergestellt werden. Für andere Rohlinge 200 können passende Adapterstücke verwendet werden.

Der Benutzer legt nun den Ring 103 in das Halteelement 101-1. An der Oberseite des Halteelements 101-1 sind mehrere taschenförmige Hinterschnitte 109 angeordnet. Diese Hinterschnitte 109 können federnd gelagert sein. Die kreisförmig angeordneten Hinterschnitte 109 sind in der Anzahl und Form variabel. Die Hinterschnitte 109 dienen zum Abstützen des Rings 103 als zweites Halteelement 101-2.

Eine anschließende Drehung des Rings 103 um ca. 45° erzeugt die gewünschte Spannkraft auf den Rohling 200. Im Allgemeinen kann der Drehwinkel jedoch auch anders gewählt werden. Der eingespannte Rohling 200 ist in der Haltevorrichtung 100 nun in dem Dentalfräsgerätdirekt einsatzbereit. Die Drehung des Rings 103 kann je nach Spannkraft manuell mit den Händen oder mittels eines Hilfswerkzeugs erfolgen. Durch die Haltevorrichtung 100 wird eine Zeitersparnis pro Materialwechsel von mehreren Minuten erreicht, ohne dass Befestigungsschrauben angezogen oder gelöst werden müssen.

Die Halteelemente 101-1 und 101-2 können spritzgussgerecht konstruiert sein, so dass diese mit geringem Aufwand herstellbar ist, wie beispielsweise durch Metallguss oder Kunststoffspritzguss. Das Halteelement 101-1 kann auch als glasfaserverstärktes Bauteil ausgestaltet sein. In diesem Fall können Funkwellen eines RFID-Chips durch das Bauteil hindurchtreten, der in dem Halteelement 101-1 angeordnet ist. Auf diese Weise kann die Haltevorrichtung 100 mittels eines RFID-Chips oder eines anderen Chips gekennzeichnet werden und der RFID-Chip kann durch die Haltevorrichtung 100 hindurch ausgelesen werden.

Die Hinterschnitte 109 können auch mittels eines Kraftschlusses das zweite Halteelement 101-2 am ersten Halteelement 101-1 fixieren. Zum Beispiel können die Hinterschnitte 109 federnd gelagert sein und mittels eines Hebels gemeinsam fixiert werden. Auf diese Weise kann das zweite Halteelement 101-2 am ersten Halteelement 101-1 eingeklemmt werden.

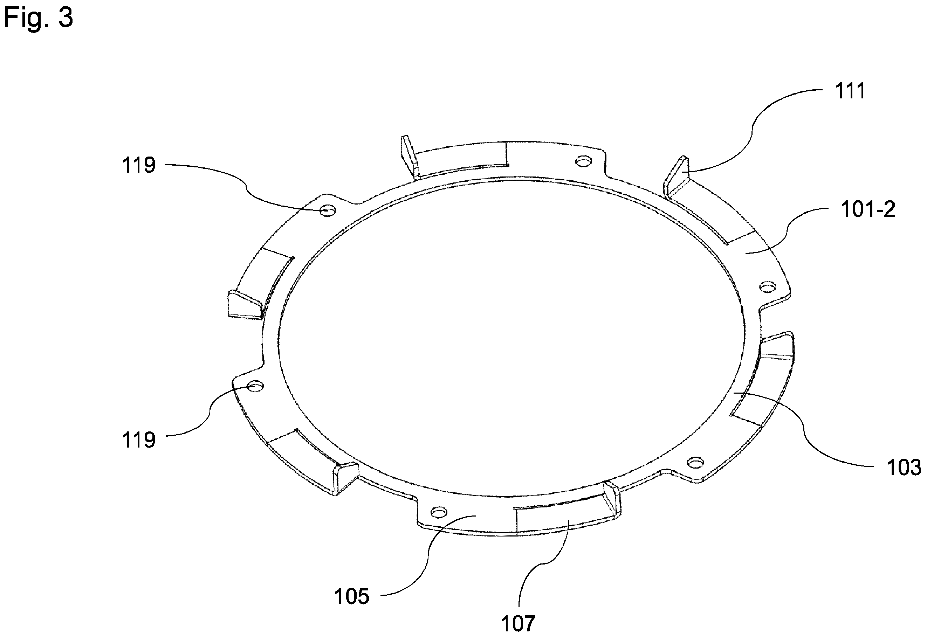

Fig. 3 zeigt eine Ansicht des zweiten Halteelements 101-2 der Haltevorrichtung 100. Das zweite Halteelement 101-2 wird durch einen flachen und runden Ring 103 gebildet. Durch den Ring 103 wird eine Spannkraft auf den Rohling 200 in Richtung des ersten Halteelements 101-1 ausgeübt. Bei hohen benötigten Spannkräften kann ein Hilfswerkzeug zum Ver- und Entriegeln des Rings 103 verwendet werden.

Der Ring 103 umfasst radial hervorstehende Führungsabschnitte 105, die sich sternförmig nach außen erstrecken. Die Führungsabschnitte 105 bilden kreisförmig angeordnete, vorgebogene Konturen. Die Führungsabschnitte 105 ermöglichen es, mittels einer Drehung im Zusammenspiel mit den gegenüberliegenden Hinterschnitten 109 eine Vorspannung zwischen dem ersten Halteelement 101-1, dem zweiten Halteelement 101-2 und dem Rohling 200 zu erzeugen.

Die Führungsabschnitte 105 umfassen als Federelement jeweils einen Federabschnitt 107 zum Erzeugen einer Spannkraft auf den Rohling 200 in Richtung des ersten Halteelements 101-1. Die Federabschnitte 107 umfassen wiederum ein abgebogenes Anschlagselement 111 zum Begrenzen der Drehbewegung. Im Allgemeinen kann das Federelement auch durch ein anderes federndes Element gebildet sein, das eine Kraft in axialer Richtung auf das Haltelement 101-1 ausübt, wie beispielsweise eine Spiralfeder oder eine Rastfeder. Auf diese Weise kann der Rohling 200 zwischen den Halteelementen 101-1 und 101-2 eingespannt werden.

Der Ring 103 kann geschlossen oder offen ausgestaltet sein, beispielsweise wenn dieser einen radialen Schlitz aufweist. Durch die variable Gestaltung des Rings 103 hinsichtlich einer Form, eines Winkels, einer Materialstärke und -güte kann die Spannkraft auf den Rohling 200 angepasst werden, da unterschiedliche Rohlinge 200 unterschiedliche Spannkräfte erfordern. Die Spannkraft auf den Rohling 200 kann mit unterschiedlichen Ringen 103 variabel eingestellt werden, wie beispielsweise durch separate Ringe 103 aus Zirkon oder Metall. Der Ring 103 kann durch ein Laser- oder Blechbiegeteil gebildet sein.

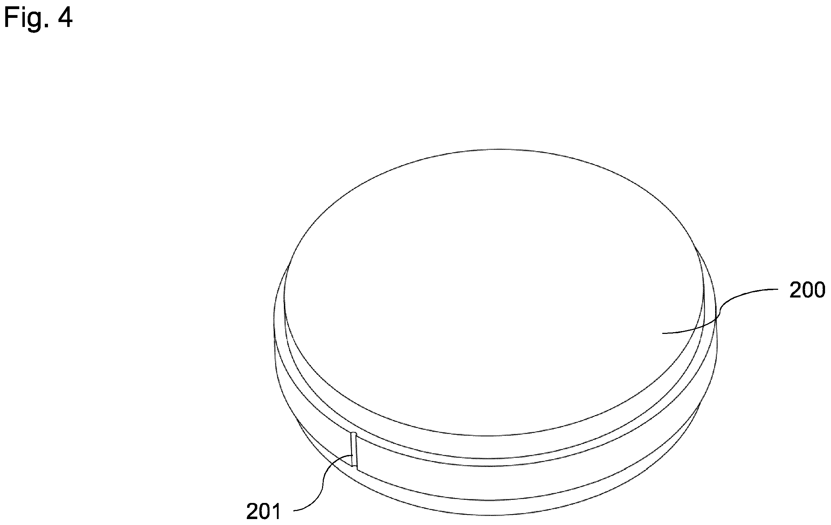

Der Ring 103 umfasst an seinem Umfang mehrere Löcher 119. Die Löcher 119 ermöglichen einen Eingriff eines Hilfswerkzeugs, um den Ring 103 zu öffnen. Zu diesem Zweck können auch Nuten im Ring 103 angeordnet sein, in die das Hilfswerkzeug eingreifen kann. Fig. 4 zeigt eine Ansicht eines Rohlings 200. Der Rohling 200 ist kreisrund und scheibenförmig. Im Allgemeinen sind jedoch auch andere Formen des Rohlings 200 möglich, wie beispielsweise rechteckig oder sechseckig. Der Rohling 200 umfasst eine Nut 201, in die das Kugeldruckstück 115 des ersten Haltelements 101-1 eindringt, so dass eine eindeutige Position des Rohlings 200 innerhalb der Haltevorrichtung 100 angegeben ist.

Um das Öffnen der Haltevorrichtung 100 zu ermöglichen, können sich die Führungsabschnitte 105 über die Hinterschnitte 109 erstrecken. In diesem Fall kann die Haltevorrichtung 100 per Hand oder mittels des Hilfswerkzeugs 200 durchgeführt werden. Ein lang ausgestalteter Hinterschnitt 109 ermöglicht die Arretierung mittels eines offenen Rings 103.

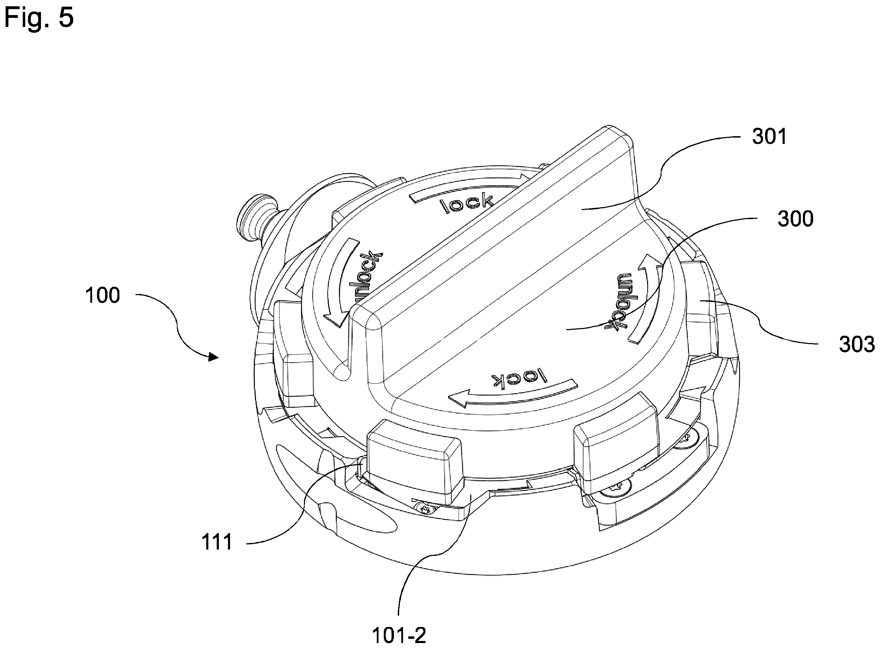

Fig. 5 zeigt eine Haltevorrichtung 100 mit einem Hilfswerkzeug 300 zum Öffnen der Haltevorrichtung 100. Das Hilfswerkzeug 300 umfasst einen Griff 301, durch den das Hilfswerkzeug 300 manuell gedreht werden kann. Um das Hilfswerkzeug 300 herum sind Stifte 303 angeordnet, die beim Aufsetzen des Hilfswerkzeugs 300 auf die Haltevorrichtung 100 in die Löcher 119 oder Nuten des zweiten Halteelements 101-2 eindringen. Auf diese Weise kann mittels des Hilfswerkzeugs 300 ein Drehmoment auf das zweite Halteelement 101-2 ausgeübt werden, um dieses an dem ersten Halteelement 101-1 zu befestigen oder zu lösen.

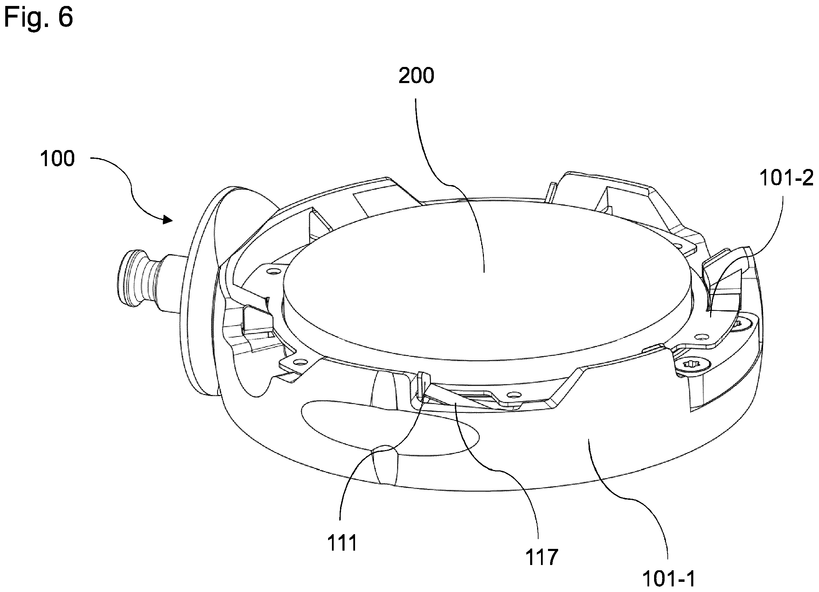

Fig. 6 zeigt eine weitere Ansicht der Haltevorrichtung 100 mit einem Verriegelungselement 117. Der Ring 103 wird durch das Verriegelungselement 117 arretiert. Das Verriegelungselement 117 ist an dem ersten Halteelement 101-1 beweglich gelagert und stützt sich an dem Anschlagselement 111 des zweiten Halteelements 101-2 ab. Dadurch wird ein Lösen des Rings 103 verhindert. Erst wenn das Verriegelungselement 117 nach unten gedrückt wird, wird der Ring 103 freigegeben.

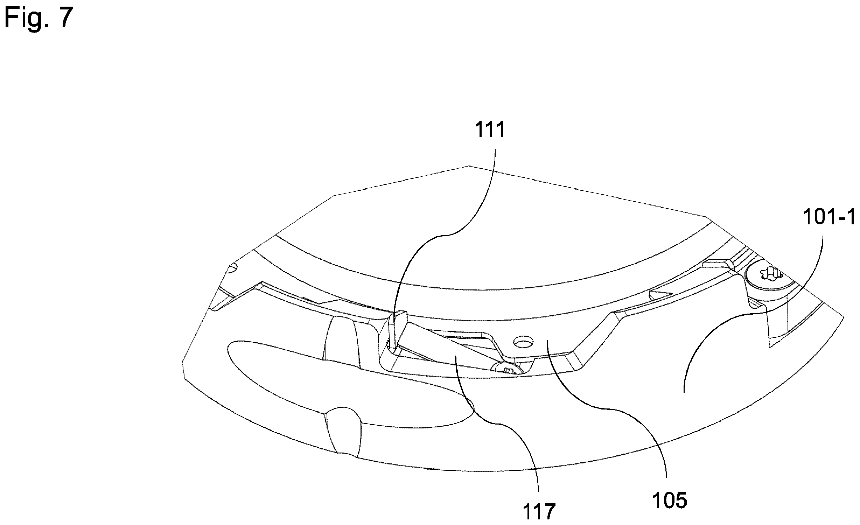

Fig. 7 zeigt eine sekundäre Verriegelung der Haltevorrichtung 100. Bei hohen Drehmomenten auf den Rohling 200 durch die Bearbeitungskräfte in der Dentalfräsmaschine kann eine Entriegelung durch eine sekundäre Verrieglung verhindert werden. Die sekundäre Verriegelung umfasst das federnde Verriegelungselement 117, das nach oben springt, wenn der Ring 103 in der Schließposition arretiert.

Das hebelartige Verriegelungselement 117 ist an dem ersten Halteelement 101-1 drehbar angeordnet und stützt sich in verriegeltem Zustand an dem Anschlagselement 111 des zweiten Haltelements 101-2 ab. Das Verriegelungselement 117 verhindert dadurch, dass eine Vibration beim Fräsen den Ring 103 löst. Das Verriegelungselement 117 wird beim Entriegeln durch entsprechende Stifte des Hilfswerkzeugs 300 nach unten gedrückt und dadurch freigegeben. In dieser Position kann das zweite Haltelement 101-2 gedreht werden.

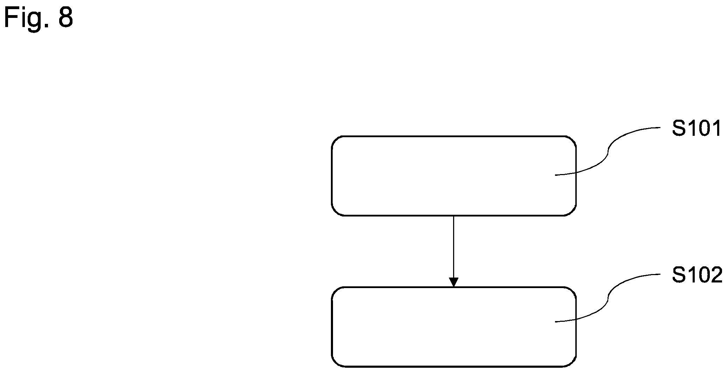

Fig. 8 zeigt ein Blockdiagramm eines Verfahrens zum Halten des Rohlings 200. In Schritt S101 wird der Rohling 200 in das erste Halteelement 101-1 eingelegt. In Schritt S102 wird der Rohling 200 durch eine Drehbewegung des zweiten Halteelements 101-2 in der Haltevorrichtung 100 eingespannt, das an dem ersten Halteelement 101-1 arretierbar ist. Dadurch wird eine stabile Fixierung des Rohlings 200 zwischen den beiden Halteelementen 101-1 und 101-2 erreicht.

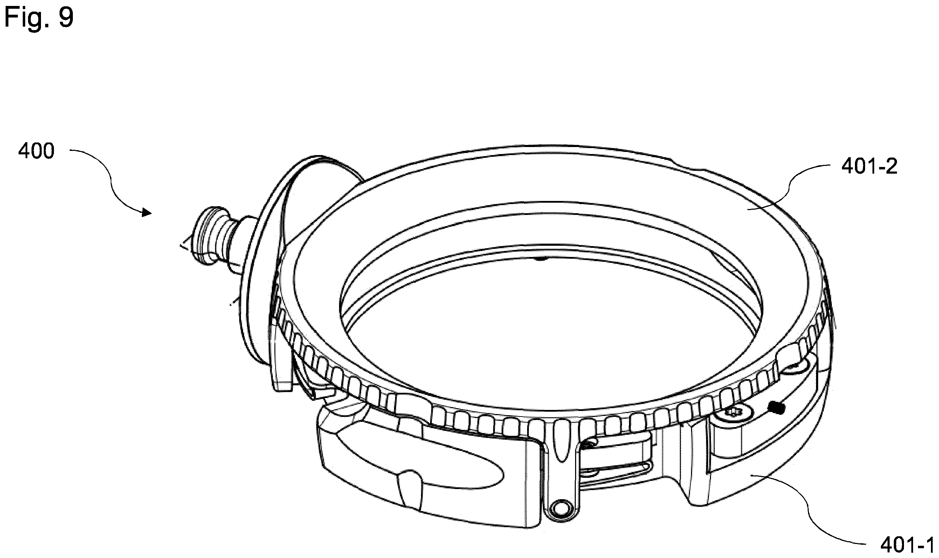

Fig. 9 zeigt eine weitere Ausführungsform der Haltevorrichtung 400. Die Haltevorrichtung 400 umfasst ebenfalls ein erstes Halteelement 401-1 und ein zweites Halteelement 401-2. Das zweite Halteelement 401-2 dient ebenfalls zum Einspannen des Rohlings 200 und ist durch eine Drehbewegung an dem ersten Halteelement 401-1 arretierbar. Zwischen den beiden Halteelementen 401-1 und 401-2 wird dadurch ebenfalls der Rohling 200 eingespannt.

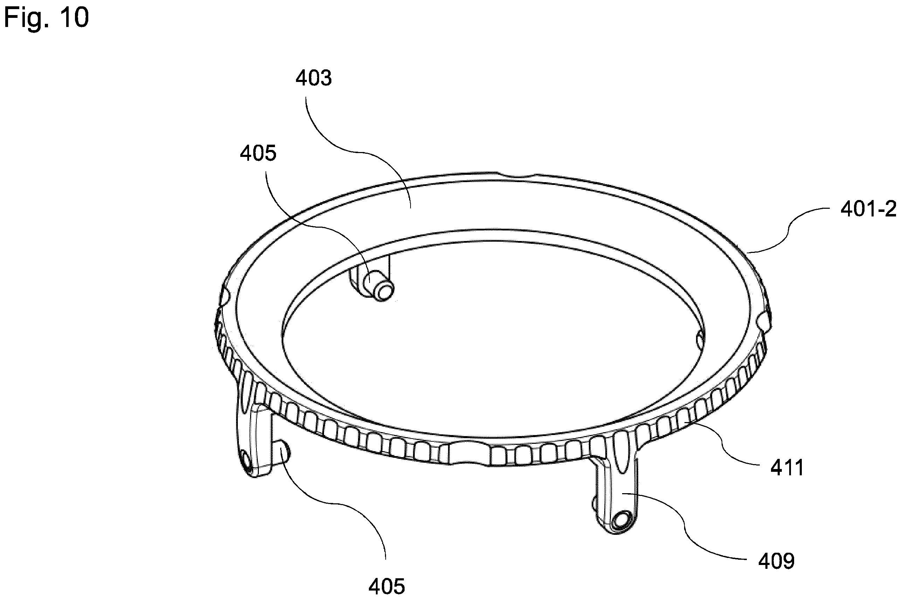

Fig. 10 zeigt eine Ansicht des zweiten Halteelements 401-2 der Haltevorrichtung 400. Das zweite Haltelement 401-2 ist ebenfalls durch einen Ring 403 gebildet. An der Unterseite des Rings 403 befinden sich mehrere stabförmige Arme 409, sich in der axialen Richtung des Rings 403 erstrecken. Die Arme 409 erstrecken sich von dem Ring 403 ausgehend in senkrechter Richtung. An der Außenumfangsseite des Rings 403 befinden sich zahlreiche Vertiefungen 411, die ein Griffprofil erzeugen und ein Drehen des Rings 403 erleichtern.

An der Spitze der Arme 409 befinden sich stiftförmige Führungsabschnitte 405, die sich wiederum in radialer Richtung nach Innen zum Zentrum des Rings 403 erstrecken. Die Führungsabschnitte 405 greifen in das erste Haltelement 401-1 ein, so dass die beiden Halteelemente 401-1 und 401-2 mit einer Drehbewegung verriegelt werden können und eine Haltespannung auf den Rohling aufgebaut werden kann.

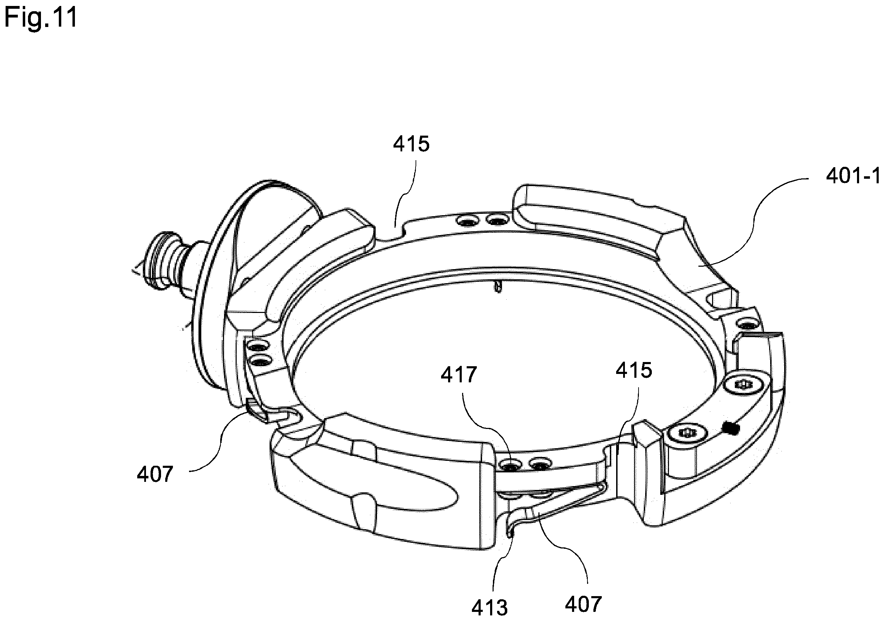

Fig. 11 zeigt eine Ansicht des ersten Halteelements 401-1 der Haltevorrichtung 400. Das erste Halteelement 401-1 umfasst mehrere Federelement 407 zum Ausüben einer Spannkraft auf die Führungsabschnitte 405 des zweiten Halteelements 401-2. Durch die Federelemente 407 werden das erste und die zweite Halteelement 401-1 und 401-2 an den Rohling 200 gedrückt. Die Federelemente 407 sind durch v-förmige Blattfedern gebildet, die an der Unterseite des ersten Haltelements 401-1 angeordnet sind. Der eine Flügel der v-förmigen Blattfedern liegt an der Unterseite des ringförmigen Halteelements 401-1 an. Die Unterseite ist im geschlossenen Zustand dem zweiten Halteelement 401-2 abgewandt. Dieser Flügel kann mit Schrauben oder Bolzen 417 an dem ringförmigen Halteelement 401-1 befestigt sein.

Der andere Flügel der V-förmigen Blattfedern steht federnd in axialer Richtung ab und umfasst eine Mulde 413, in die Führungsabschnitte 405 im geschlossenen Zustand eingreifen. An der Außenumfangseite des ersten Haltelements 401-1 befinden sich mehrere radiale Aussparungen 415, deren Anzahl der Anzahl der Arme des zweiten Halteelements 401-2 entspricht. Beim Zusammensetzen der Halteelemente 401-1 und 401-2 werden zunächst die Führungsabschnitte 405 des zweiten Halteelements 401-2 in axialer Richtung durch die Aussparungen 415 geschoben. Anschließend werden die Halteelemente 401-1 und 401-2 gegeneinander gedreht. Hierbei gleiten die Führungsabschnitte 405 über den abstehenden Flügel der Blattfedern, der dabei eine zunehmende, zusammendrückende axiale Kraft auf das zweite Halteelement 401-2 ausübt. In der Anschlagsposition rasten die Führungsabschnitte 405 in der Mulde 413 ein und spannen den Rohling ein. Im Allgemeinen kann das Federelement 407 auch durch ein anderes federndes Element gebildet sein, das eine Kraft in axialer Richtung auf das Haltelement 401-2 ausübt, wie beispielsweise eine Spiralfeder oder eine Rastfeder. Auf diese Weise kann der Rohling 200 zwischen den Halteelementen 401-1 und 401-2 eingespannt werden.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Haltevorrichtung
- 101: Halteelement
- 103: Ring
- 105: Führungsabschnitt
- 107: Federabschnitt
- 109: Hinterschnitt
- 111: Anschlagelement
- 113: Werkstückaufnahme
- 115: Kugeldruckstück
- 117: Verriegelungselement
- 119: Loch

- 200: Rohling
- 201: Nut

- 300: Hilfswerkzeug
- 301: Griff
- 303: Stifte

- 400: Haltevorrichtung
- 401: Halteelement
- 403: Ring
- 405: Führungsabschnitt
- 407: Federelement
- 409: Arm
- 411: Vertiefung
- 413: Mulde

## Patentansprüche

1. Haltevorrichtung (100) für einen Rohling (200), mit:
- einem ersten Halteelement (101-1, 401-1) zum Einlegen des Rohlings (200); und
- einem zweiten Halteelement (101-2, 401-2) zum Einspannen des Rohlings (200), das durch eine Drehbewegung an dem ersten Halteelement (101-1, 401-1) arretierbar ist; **dadurch gekennzeichnet, dass** das erste Halteelement (401-1) zumindest ein Federelement (407) zum Ausüben einer Spannkraft auf einen Führungsabschnitt (405) des zweiten Halteelements (401-2) umfasst oder das zweite Halteelement (101-2) zumindest ein Federelement (107) zum Ausüben einer Spannkraft auf einen Führungsabschnitt des ersten Halteelements (101-1) umfasst.

2. Haltevorrichtung (100) nach Anspruch 1, wobei das zweite Halteelement (101-2) durch einen offenen oder geschlossenen Ring (103, 403) gebildet ist.

3. Haltevorrichtung (100) nach Anspruch 2, wobei der Ring (103, 403) radial nach innen oder nach außen hervorstehende Führungsabschnitte (105, 405) umfasst.

4. Haltevorrichtung (100) nach Anspruch 3, wobei die Führungsabschnitte (405) an Armen (409) angeordnet sind, die sich in axialer Richtung des zweiten Halteelements (401-2) erstrecken.

5. Haltevorrichtung (100) nach Anspruch 3 oder 4, wobei die radial hervorstehenden Führungsabschnitte (105) jeweils einen Federabschnitt (107) zum Erzeugen einer Spannkraft auf den Rohling (200) in Richtung des ersten Halteelements (101-1) umfassen.

6. Haltevorrichtung (100) nach Anspruch 5, wobei das erste oder zweite Halteelement (101-1, 401-1, 101-2, 401-2) ein Anschlagselement (111) zum Begrenzen der Drehbewegung umfasst.

7. Haltevorrichtung (100) nach Anspruch 1, wobei das Federelement (407) durch eine Blattfeder gebildet ist.

8. Haltevorrichtung (100) nach einem der Ansprüche 1 bis 7, wobei das erste oder zweite Haltelement (401-1, 401-2) zumindest eine Aussparung (415) zum Hindurchführen des Führungsabschnittes (405) umfasst.

9. Haltevorrichtung (100) nach Anspruch 7, wobei die Blattfeder v-förmig ist und eine Seite der v-förmigen Blattfeder an dem ersten Halteelement (401-1) anliegt.

10. Haltevorrichtung (100) nach einem der Ansprüche 1 bis 9, wobei die Federelemente (407) an der Seite des ersten Halteelement (401-1) angeordnet sind, die dem zweiten Halteelement (401-2) abgewandt ist.

11. Verfahren zum Halten eines Rohlings (200), mit:
- Einlegen (S101) des Rohlings (200) in ein erstes Halteelement (101-1, 401-1); und
- Einspannen (S102) des Rohlings (200) durch eine Drehbewegung eines zweiten Halteelements (101-2, 401-2), das an dem ersten Halteelement (101-1) arretierbar ist und Federabschnitte (107) des zweiten Halteelements (101-2) an Hinterschnitten (109) des ersten Halteelements (101-1) abgestützt werden oder radial nach innen oder nach außen hervorstehende Führungsabschnitte (405) des ersten oder zweiten Halteelements (401-2) an Federelementen (407) des ersten oder zweiten Halteelements (401-1) abgestützt werden.

12. Verfahren nach Anspruch 11, wobei eine Spannkraft auf den Rohling (200) in Richtung des ersten Halteelement (101-1) erzeugt wird.

## Claims

1. A holding device (100) for a blank (200), comprising:
- a first holding element (101-1, 401-1) for inserting the blank (200); and
- a second holding element (101-2, 401-2) for clamping the blank (200), which can be locked in place by a rotational movement on the first holding element (101-1, 401-1);
**characterized in that** the first holding element (401-1) comprises at least one spring element (407) for exerting a clamping force on a guide section (405) of the second holding element (401-2), or the second holding element (101-2) comprises at least one spring element (107) for exerting a clamping force on a guide section of the first holding element (101-1).

2. The holding device (100) according to claim 1, wherein the second holding element (101-2) is formed by an open or closed ring (103, 403).

3. The holding device (100) according to claim 2, wherein the ring (103, 403) comprises radially inwardly or outwardly projecting guide sections (105, 405).

4. The holding device (100) according to claim 3, wherein the guide sections (405) are arranged on arms (409) which extend in the axial direction of the second holding element (401-2).

5. The holding device (100) according to claim 3 or 4, wherein the radially projecting guide sections (105) each comprise a spring section (107) for generating a clamping force on the blank (200) in the direction of the first holding element (101-1).

6. The holding device (100) according to claim 5, wherein the first or second holding element (101-1, 401-1, 101-2, 401-2) comprises a stop element (111) for limiting the rotational movement.

7. The holding device (100) according to claim 1, wherein the spring element (407) is formed by a leaf spring.

8. The holding device (100) according to any one of claims 1 to 7, wherein the first or second holding element (401-1, 401-2) comprises at least one recess (415) for the passage of the guide section (405).

9. The holding device (100) according to claim 7, wherein the leaf spring is V-shaped and one side of the V-shaped leaf spring abuts the first holding element (401-1).

10. The holding device (100) according to any one of claims 1 to 9, wherein the spring elements (407) are arranged on the side of the first holding element (401-1) that faces away from the second holding element (401-2).

11. A method for holding a blank (200), comprising:
- inserting (S101) the blank (200) into a first holding element (101-1, 401-1); and
- clamping (S102) the blank (200) by a rotational movement of a second holding element (101-2, 401-2) which can be locked in place on the first holding element (101-1), and spring sections (107) of the second holding element (101-2) are supported on undercuts (109) of the first holding element (101-1), or radially inwardly or outwardly projecting guide sections (405) of the first or second holding element (401-2) are supported on spring elements (407) of the first or second holding element (401-1).

12. The method according to claim 11, wherein a clamping force is generated on the blank (200) in the direction of the first holding element (101-1).

## Revendications

1. Dispositif de maintien (100) pour un lingotin (200), avec :
- un premier élément de maintien (101-1, 401-1) pour y insérer le lingotin (200) ; et
- un deuxième élément de maintien (101-2, 401-2) pour serrer le lingotin (200), qui peut être verrouillé par un mouvement rotatif sur le premier élément de maintien (101-1, 401-1) ;
**caractérisé en ce que** le premier élément de maintien (401-1) comprend au moins un élément à ressort (407) pour exercer une force de serrage sur une zone de guidage (405) du deuxième élément de maintien (401-2) ou le deuxième élément de maintien (101-2) comprend au moins un élément à ressort (107) pour exercer une force de serrage sur une zone de guidage du premier élément de maintien (101-1).

2. Un dispositif de maintien (100) selon la revendication 1, où le deuxième élément de maintien (101-2) est formé par un anneau ouvert ou fermé (103, 403).

3. Un dispositif de maintien (100) selon la revendication 2, où l'anneau (103, 403) comprend des zones de guidage (105, 405) qui font saillie radialement vers l'intérieur ou vers l'extérieur.

4. Un dispositif de maintien (100) selon la revendication 3, où les zones de guidage (405) sont disposées sur des bras (409) qui s'étendent dans la direction axiale du deuxième élément de maintien (401-2).

5. Un dispositif de maintien (100) selon la revendication 3 ou 4, où les zones de guidage (105) faisant saillie radialement comprennent chacune une section à ressort (107) pour générer une force de serrage sur le lingotin (200) dans la direction du premier élément de maintien (101-1).

6. Un dispositif de maintien (100) selon la revendication 5, où le premier ou le deuxième élément de maintien (101-1, 401-1, 101-2, 401-2) comprend un élément de butée (111) destiné à limiter le mouvement rotatif.

7. Dispositif de maintien (100) selon la revendication 1, où le l'élément à ressort (407) est constitué d'un ressort à lame.

8. Un dispositif de maintien (100) selon l'une des revendications 1 à 7, où le premier ou le deuxième élément de maintien (401-1, 401-2) comprend au moins un évidement (415) destiné à permettre le passage de la zone de guidage (405).

9. Un dispositif de maintien (100) selon la revendication 7, où la lame à ressort est en V et un côté du ressort en V repose sur le premier élément de maintien (401-1).

10. Un dispositif de maintien (100) selon l'une des revendications 1 à 9, où les éléments à ressort (407) sont disposés sur le côté du premier élément de maintien (401-1), tournés à l'opposé du deuxième élément de maintien (401-2).

11. Procédé pour maintenir un lingotin (200), comprenant :
- l'insertion (S101) du lingotin (200) dans un premier élément de maintien (101-1, 401-1) ; et
- le serrage (S102) du lingotin (200) par un mouvement rotatif d'un deuxième élément de maintien (101-2, 401-2), qui peut être verrouillé sur le premier élément de maintien (101-1) et les éléments à ressort (107) du deuxième élément de maintien (101-2)sont maintenus sur des contre-dépouilles (109) du premier élément de maintien (101-1) ou des zones de guidage dépassant radialement vers l'intérieur ou vers l'extérieur (405) du premier ou du deuxième élément de maintien (401-2) sur des éléments à ressort (407) du premier ou du deuxième élément de maintien (401-1).

12. Procédé selon la revendication 11, où une force de serrage est générée sur le lingotin (200) dans la direction du premier élément de maintien (101-1).
